Europäisches Patentamt

European Patent Office

Office européen des brevets

(19)

(11) Publication number: **0 146 201**
**B1**

(12) **EUROPEAN PATENT SPECIFICATION**

(45) Date of publication of patent specification: **15.06.88**

(21) Application number: **84305352.1**

(22) Date of filing: **07.08.84**

(51) Int. Cl.⁴: **H 01 M 4/50,** H 01 M 10/36,
C 01 G 45/00, C 01 G 45/02

(54) **Rechargeable manganese oxide electrode materials.**

(30) Priority: **08.08.83 US 521474**

(43) Date of publication of application:
**26.06.85 Bulletin 85/26**

(45) Publication of the grant of the patent:
**15.06.88 Bulletin 88/24**

(84) Designated Contracting States:
**DE FR GB IT**

(56) References cited:
**US-A-4 268 589**
**US-A-4 384 029**

CHEMICAL ABSTRACTS, vol. 44, no. 14, July
25, 1950, Columbus, Ohio, USA A.D. WADSLEY
"A hydrous manganese oxide with exchange
properties" abstract no. 6327h

CHEMICAL ABSTRACTS, vol. 45, no. 1, january
10, 1952, Columbus, Ohio, USA A.D. WADSLEY
"Synthesis of some hydrated manganese
minerals" abstract no. 503a

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**One Parklane Boulevard Parklane Towers East**
**Dearborn Michigan 48126 (US)**
(84) **IT**

(72) Inventor: **Wroblowa, Halina Stefania**
**5192 richard Run West**
**West Bloomfield Michigan 48033 (US)**
Inventor: **Kummer, Joseph Talbot**
**3904 Golfside**
**Ypsilanti Michigan 48197 (US)**
Inventor: **Yao, Yung-Fang**
**Sheahan Drive**
**Dearborn Heights Michigan 48127 (US)**

Courier Press, Leamington Spa, England.

(74) Representative: **Messulam, Alec Moses et al**
**A. Messulam & Co. 24 Broadway**
**Leigh on Sea Essex SS9 1BN (GB)**

## Description

The invention relates to an electrode for a battery cell. In particular, the invention provides a rechargeable manganese oxide electrode initially rechargeable up to about 90% of its theoretical two electron capacity. After 260 cycles, the electrode still retains above 50% of its theoretical two electron capacity.

The manganese dioxide electrode has found wide application as a primary battery. One of the applications of such an electrode is in batteries used for a flashlight. The use of a flashlight is characteristic for an energy storage problem on a small scale; chemically stored energy is converted into electricity at will. A high price is paid for this conversion convenience. The throw-away battery may cost ten times the energy it stores simply to manufacture the battery. This is an important economic point of view considering that billions of these types of throw-away batteries are produced yearly throughout the world.

It is already known that manganese dioxide cells of the alkaline version can be recharged a limited number of times so long as the cells are not discharged on their discharge cycle more than about 15% of their two electron capacity. Normally these cells can be recharged at this very reduced fraction of their two electron capacity only about 50 cycles or so. Thus, it is known that certain manganese dioxide cells of the alkaline version can be recharged for approximately 50 cycles or so if the reactant (manganese dioxide) utilization does not exceed about 15% of the two electron capacity. Rechargeable manganese oxide electrodes of the invention can be discharged a substantially greater amount than known cells in the discharge/recharge cycle and at the same time survive a significant number of cycles more than the presently known cells.

With the improved rechargeable manganese oxide electrode material of this invention, an electrode is provided which can be initially discharged up to 90% of their total two electron capacity. Such electrode containing cells have been cycled in excess of 200 cycles between a discharged and recharged condition before their capacity dropped to about 50% of the theoretical two electron capacity.

A search was conducted on the subject matter of this specification in the U.S. Patent and Trademark Office. As a result of that search, the following U.S. Patents were cited as of interest: 3,066,179; 3,433,687; 3,615,833; 3,915,837; 4,009,052; 4,041,220; 4,049,887; 4,121,018; 4,125,687 and 4,268,589.

Chemical Abstract Volume 45, No. 1, 503a, 10 January 1951 discloses that hydrated Mn oxides containing Ba, Pb, Zn, Cu, Al, Li and Ca were prepared by agitating Na compound with an excess of a 10% solution of metal salt, washing and drying by aspersion.

U.S. Patent 4,268,589 discloses an alkaline manganese dioxide cell which can be repeatedly recharged from a discharged state. This cell is made by chemically contacting the manganese dioxide with free negative ions of at least one weak acid that does not, in conditions prevailing in the cell, form salts with the manganese, the crystals of which contain water of crystallization. This patent further disclosed that suitable weak acids are silicic, carbonic, boric, cyanic and acidic acids, and hydrogen sulfide.

According to the invention, there is provided an electrode for a battery cell including manganese oxide and fine powdered carbon or graphite characterised in that the electrode further includes bismuth.

The presence of bismuth in the electrode vastly improves rechargeability and improves the depth from which the electrode can be recharged as well as the number of times that the electrode may be recharged. These new manganese oxide electrodes lead to practical and efficient rechargeable cells.

The introduction of bismuth, or a mixture of bismuth and lead into a manganese oxide electrode material vastly improves not only the depth of discharge from which the electrode material may be recharged, but also the number of times that the electrode material may be discharged and thereafter recharged while retaining high capacity. Substantial improvement of the reactant utilization as well as of the number of times the cell can be cycled comes about only when bismuth, or a mixture of bismuth and lead is included as an active element in the electrode material. Material such as potassium, sodium, calcium, manganese, zinc, aluminum, and silver were tested and found not to be of any significant value in improving the rechargeability of a manganese oxide electrode material.

According to a preferred, but not limiting, embodiment of the improved manganese oxide electrode materials of this invention, the materials are characterised in the following manner.

Each of the improved manganese oxide electrode materials is characterised in that bismuth, or a mixture of bismuth and lead is included as an active element in the electrode material, the heavy metal initially being in a form not reacted with the manganese oxide electrode material which may consist, for example, of various forms of $MnO_2$ or Birnessite. In essence, the improved manganese oxide electrode material is prepared by what is called a "physical method" in which the heavy metal is mixed with the manganese oxide, but not chemically reacted therewith prior to utilization of the electrode material in a cell.

In accordance with preferred teachings of this invention, each one of the improved manganese oxide electrode materials is characterised in that it is made in the following manner. A manganese oxide containing material is mixed with other electrode forming materials and bismuth, or a mixture of bismuth and lead. The electrode forming materials are formed into an electrode. The electrode is formed into a cell. After formation of the cell, the cell is electrically charged and discharged, for a few conditioning cycles. The cell so formed can be charged and recharged for a substantial percentage of its two electron capacity for a number of cycles substantially greater than previously known materials.

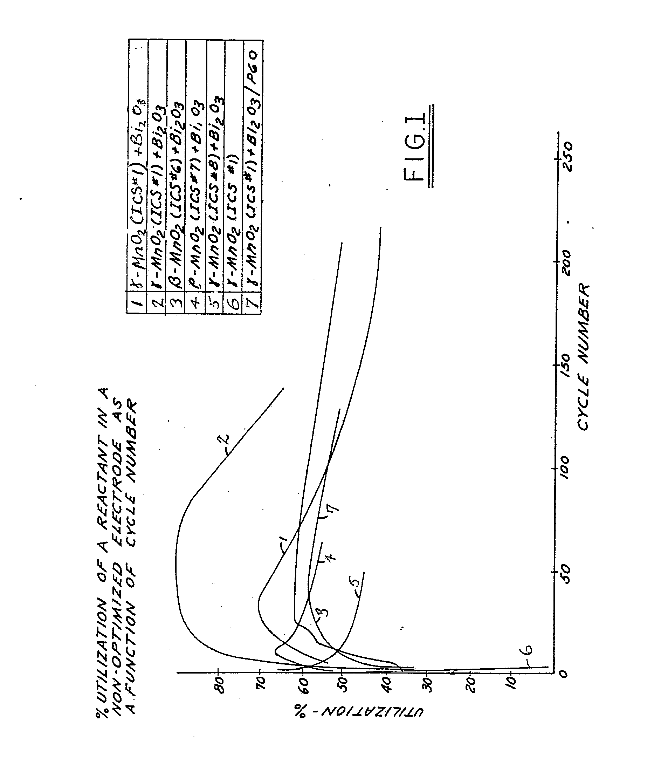

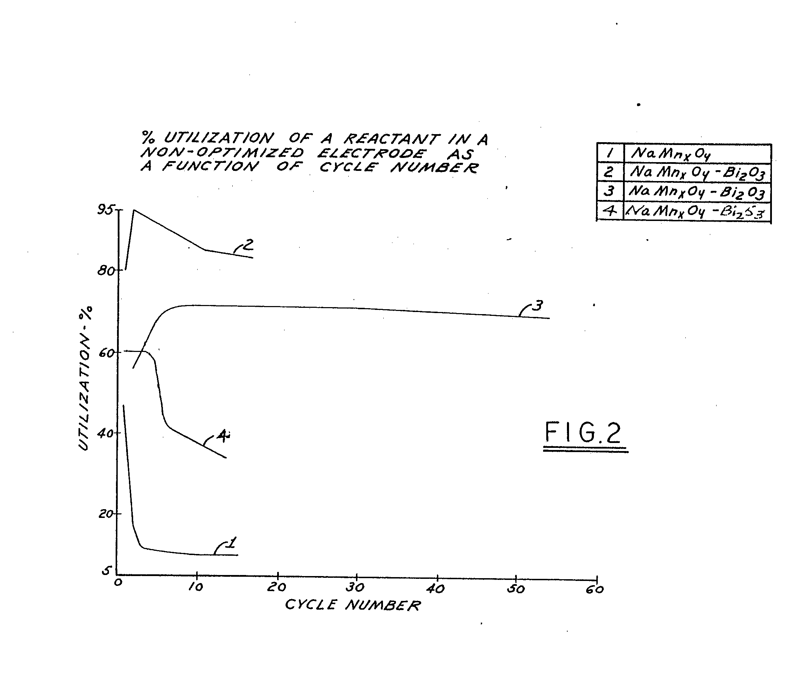

The invention is further described in specific examples and with reference to Figures 1 and 2 of the accompanying drawings which are graphs of the Percent of Utilization of a Reactant In a Non-Optimized Electrode as a Function of Cycle Number for various test material set forth in the examples.

The manganese oxide electrode embodying the invention has certain advantageous characteristics. These advantageous characteristics are that the number of cycles the electrode can undergo maintaining high reactant utilization is substantially greater than it was observed for any previously known manganese dioxide rechargeable electrode material. Such advantages will be pointed in greater detail hereinbelow.

In accordance with a preferred embodiment of this specification, a skilled artisan will be taught what is classified as a "physical method" for preparing the improved manganese oxide electrode materials in accordance with this invention. EP—A—138316, sets forth what is classified as a "chemical method" for preparing a manganese dioxide electrode material which is in accordance with the teachings of that invention.

Examples

1. Bismuth oxide-manganese dioxide mixture

This example will show the invention in the improved manganese oxide electrode material by illustrating a material in which bismuth is included as an active element in a manganese dioxide electrode material. The material illustrated is prepared by a physical method. 25 parts by weight of manganese dioxide (International Common Sample No. 1), after being ground for 18 hours in a pestle and mortar, was mixed with 10 parts by weight of $Bi_2O_3$ and 1800 parts by weight of graphite (SP-1) powder in a spex-mixer mill for approximately 10 minutes. The electrode paste was obtained by adding 1280 parts by weight of 9M KOH solution containing 4% by weight of an organic gelling agent to the dry powder and mixing for an additional five minutes. Electrodes were prepared from this material by sandwiching approximately 200 mg of the paste between two platinum gauze current collectors, themselves being sandwiched between two sheets of Celgard No. 3401 separators. The so-formed electrode 1.9 cm (0.75") in diameter was further wrapped in two additional sheets of Celgard (Reg. Trade Mark) No. 3401 separator and epoxyed on one side with Epoweld 3673 cement. The electrode was inserted into a 0.75" diameter (I.D.) Teflon (Regd. Trade Mark) tube, pressed at about 10 pounds per square inch pressure, and allowed to cure for 24 hours at room temperature. The so-produced electrode was cycled at 0.5 mV/sec in the range −0.6 V to +0.2 V (with respect to a Hg/Hg) electrode).

The results of this cycling of the test electrode are shown in Figure 1 as curve No. 1. This curve shows that during the initial cycling of the electrode, its percentage of utilization based on $2e^-$ actually increases. The curve also shows that when bismuth is used in the manganese dioxide electrode of material this Example 1, the improved material may be recycled a substantial number of times in excess of the 50 cycles and may be discharged in its highly cycled state to about 40% or more of its two electron capacity. This is substantially greater than any known rechargeable manganese dioxide electrode material which, for example, may be recycled at a maximum of only about 50 times at a discharge utilization of approximately 15% of its two electron capacity.

2. Bismuth oxide-manganese dioxide mixture

This example will show the invention in the improved manganese oxide electrode material by illustrating a material in which bismuth is included as an active element in a manganese dioxide electrode material. The material illustrated is also prepared by a physical method.

Five parts by weight of manganese dioxide (International Common Sample No. 1) was ground for 18 hours in a pestle and mortar and then mixed with two parts by weight of $Bi_2O_3$ and 165 parts by weight of graphite (SP—1) powder in a spex-mixer mill for approximately 10 minutes. A modified electrode paste was obtained by adding 300 parts by weight of 9M KOH solution containing 4% by weight of an organic gelling agent to the dry powder and mixing for an additional five minutes.

A modified electrode was prepared by spreading 0.935 grams of the paste made in the manner described above in a 2.54 cm×2.54 cm×5.08 cms (1"×1"×0.020") cavity of a 7.62 cm×7.62cm (3"×3") plexiglass sheet. The paste was covered with three layers of Celgard (Reg. Trade Mark) No. 3401 separator, which layers were in turn covered with a sheet of pellon paper which separated the improved manganese dioxide electrode from a NiO/NiOOH counterelectrode. This flat cell was cycled at 0.5 mV/sec in the range −0.6 V to +0.2 V (with respect to a Hg/HgO electrode) in a flat cell.

Results of the cycling are shown in Figure 1 as curve 2. Once again, this curve demonstrated that during the initial cycling the percent utilization based on a two electron capacity increases to a maximum point. In this case, the maximum utilization approached 90+ percent. Once again, because of the excellent characteristics of this material, the testing thereof was terminated between 100 and 150 cycles.

3. Bismuth oxide-manganese dioxide mixture

This example will show the invention in the improved manganese oxide electrode material by illustrating a material in which bismuth is included as an active element in a manganese dioxide electrode material. The material illustrated is also prepared by a physical method. The manganese dioxide used in this example, however, is a beta manganese dioxide which is a different form than the gamma manganese dioxide used in the first three examples.

The same procedure as Examples 1—2 is followed, and the materials used are 100 mg of beta manganese dioxide (International Common Sample No. 6) with 42 mg of $Bi_2O_3$ and 6.9 grams of graphite powder. These materials, after being mixed, were in turn mixed with 8.8 grams of 9M KOH solution containing 4% by weight of an organic gelling agent. The material made in this manner was made into a device for testing in accordance with the procedure described in Example 1.

Results of cycling of this electrode are shown in Figure 1 as curve 3. Once again, this curve has the characteristic of having its percent utilization based on its two electron capacity initially increased as the electrode material is cycled.

4. Bismuth oxide-manganese dioxide mixture

This example will show the invention in the improved manganese oxide electrode material by illustrating material in which the bismuth is included as an active element in a manganese dioxide electrode material. The material illustrated is also prepared by a physical method. The type of manganese dioxide used, however, is a rho phase manganese dioxide.

In this example, 8.8 parts by weight of rho-manganese dioxide (International Common Sample No. 7), after having been ground for 18 hours in a pestle and mortar, was mixed with three parts by weight of $Bi_2O_3$ and 540 parts by weight of graphite (SP-1) powder in a spex-mixer mill for approximately 10 minutes. To this mixture was added 705 parts by weight of 9M KOH solution containing 4% by weight of an organic gelling agent. This mixture was then mixed for an additional five minutes to obtain a paste. An electrode was made from the paste in the same manner as discussed in Example 1 and tested as per Example 1. The results of cycling are shown in Figure 1 as curve 4.

5. Bismuth oxide-manganese dioxide mixture

This example will show the invention in the improved manganese oxide electrode material by illustrating a material in which the bismuth is included as an active element in a manganese dioxide electrode material. The material illustrated is also prepared by a physical method.

26 parts by weight of chemically prepared gamma manganese dixide (International Common Sample No. 8), once having been ground for 18 hours in a pestle and mortar, was then mixed with 10 parts by weight of $Bi_2O_3$ and 1830 parts by weight of graphite (SP-1) powder for 10 minutes in a spex-mixer mill. A paste was obtained by adding 2325 parts by weight of 9M KOH solution containing 4% by weight of an organic gelling agent to the dry mixture and mixing for an additional five minutes. Electrodes were prepared using this paste mixture and tested in the same manner as set forth in Example 1. The results of the cycling are depicted in Figure 1 as curve 5.

6. Manganese Dioxide alone

The purpose of this example is to illustrate that when no heavy metal addition of the type described above is made to an International Common Sample No. 1 of manganese dioxide, the utilization and recharge capabilities of the cell are extremely poor.

The procedure of Example 1 is carried out, except that there is no mixing of any elements with the manganese dioxide. Thus, the manganese dioxide is used as described in the latter portion of Example 1 in order to manufacture an electrode which is subsequently made into a cell. The manganese dioxide used was gamma manganese dioxide (International Common Sample No. 1).

Testing of a cell produced using this material resulted in the data shown in Figure 1 as curve 6. This curve shows that the material can be cycled very little, and that very little cycling causes a disastrous loss in the utilization of the material based upon the percentage discharge one can obtain on the two electron capacity of this material.

7. Bismuth oxide/lead oxide-manganese dioxide mixture

This example will show the invention in the improved manganese oxide electrode material by illustrating a material in which both bismuth and lead are included as an active element in a manganese dioxide electrode material. The material illustrated is also prepared by a physical method.

50.8 parts by weight of gamma manganese dioxide (International Common Sample No. 1) after being ground for 18 hours in a pestle and mortar, was mixed with five parts by weight of $Bi_2O_3$, 9.26 parts by weight of PbO, and 3243 parts by weight of graphite (SP-1) powder in a spex-mixer mill for approximately two hours. A modified electrode paste was obtained by adding 3090 parts by weight of 9M KOH solution containing 4% by weight of an organic binder to the dry power and mixing for an additional one-half hour. Electrodes were prepared using this paste and tested according to the procedure described in Example 1. The resulting data is identified in Figure 1 as curve 7.

8. Birnessite alone

The purpose of this example is to illustrate that when no heavy metal addition of the type described above is made to a Birnessite sample, the utilization and recharge capabilities of the cell are extremely poor.

The preparation of $NaMn_xO_y$ compound is described in detail in EP—A—138316. In the process, $Mn(OH)_2$ formed by a reaction of $Mn(NO_3)_2$ with excess NaOH at 0—3°C was oxidized by $O_2$ in a strong alkaline solution at 0—3°C for five or more hours followed by filtering, thorough washing with water, and drying at 65°C. Elemental analysis of the compound gave 48.8% Mn and 6.2% Na. $NaMn_xO_y$ so formed was then ground and mixed with graphite powder of twice the weight. The mixture then was milled. The mixture was then pressed at a pressure of 10 tons to form a disc of 1.2 cm diameter. ·

A cell was formed using the so-formed disc as a cathode, platinum wire as an anode, and 9M KOH as an electrolyte. This cell was tested as constant current density of 1 ma/0.02 g of disc weight. The discharge/charge was cycled between running voltages of −0.5 to 0.5 V against a HgO/Hg reference electrode. This cell used a Flex-Sil microporous rubber as the separator. The results of running this material are shown in Figure 2 as curve 1. This material, without any lead or bismuth additions, showed poor recharge capabilities.

9. Birnessite-bismuth oxide mixture

This example will show the invention in the improved manganese oxide electrode material by illustrating a material in which bismuth is included as an active element in a Birnessite material. The material illustrated is prepared by a physical method.

The preparation of $NaMn_xO_y$ compound has been described in Example 9. Weighed amounts of the so-formed material, along with $Bi_2O_3$ in a Mn:Bi mole ratio equal to 5.6, were mixed and ground in a mortar and pestle. Thereafter, the materials were mixed with graphite powder of twice the weight and milled. The mixture was pressed at a pressure of 10 tons to form a disc of 1.2 cm diameter. Cells were formed using these discs as a cathode, platinum wire as an anode, and 9M KOH as an electrolyte. The so-formed cells were tested at constant current density of 1 ma/0.02 g of disc weight. The discharge/charge was cycled between running voltages of −0.5 to 0.5 against an HgO/Hg reference electrode. Flexsil microporous rubber was used as the separator. The results of the testing of the cell is shown in Figure 2 as curve 2.

The curve shows that when bismuth is used in the Birnessite material, the improved material may be recycled a substantial number of times and may be discharged in its highly cycled state to a substantial proportion of its two electron capacity.

10. Birnessite-bismuth oxide mixture

This example will show the invention in the improved manganese oxide electrode material by illustrating a material in which bismuth is included as an active element in a Birnessite material. The material illustrated is prepared by a physical method.

Birnessite was prepared as described in Example 8. 51 parts by weight of Birnessite that has been ground for 18 hours in a pestle and mortar was mixed with 14 parts by weight of $Bi_2O_3$ (Mn:Bi molar ratio equals 7) and 5013 parts by weight of graphite (SP-1) in a spex-mixer mill for approximately 10 minutes. 3083 parts by weight of 9M KOH solution containing 4% by weight of an organic gelling agent was added to this dry powder and mixed for an additional five minutes to obtain a paste. The electrode was made from this paste as discussed in Example 8 and tested for rechargeability in the manner described in Example 8. The resulting data is identified in Figure 2 as curve 3.

11. Birnessite-bismuth suphide mixture

This example will show the invention in the improved manganese oxide electrode material by illustrating a material in which bismuth is included as an active element in a Birnessite electrode material. The material illustrated is prepared by a physical method.

An electrode was prepared as described in Example 9, except that $Bi_2O_3$ was replaced by $Bi_2S_3$ in a Mn:Bi molar ratio equal to 10.8. The data obtained from testing of this electrode from into a cell is shown in Figure 2 as curve 4.

General factors to be taken into account

In order to made the improved manganese dioxide electrode material, it is necessary to include in that material fine powdered carbon or graphite to aid in the electronic conductivity of the material.

An organic binder and/or gelling agent is also used in formation of the manganese dioxide electrode material. Normally, the organic gelling agent is made up of 4% by weight of carboxy methyl cellulose in 96% by weight of 9M KOH.

It may be seen from the information reported above and the material presented graphically in the Figures that the inclusion of bismuth, or a mixture of bismuth and lead in the manganese dioxide electrode brings about a rechargeability which is not seen in the manganese dioxide electrode by itself. This rechargeability enhancement is unique for the bismuth, and bismuth/lead mixtures.

**Claims**

1. An electrode for a battery cell including manganese oxide and fine powdered carbon or graphite characterised in that the electrode further includes bismuth.

2. An electrode as claimed in Claim 1, in which said material further includes lead.

3. An electrode as claimed in Claim 1 or 2, wherein said manganese oxide is manganese dioxide.

4. An electrode as claimed in Claim 1 or 2, wherein said manganese oxide is Birnessite.

5. An electrode as claimed in any one of the preceding claims, wherein said material includes KOH solution including an organic gelling agent.

6. A battery cell including an electrode as claimed in any one of the preceding claims.

**Patentansprüche**

1. Elektrode für eine Batteriezelle, enthaltend Manganoxid und feingepulverten Kohlenstoff oder Graphit, dadurch gekennzeichnet, dass die Elektrode ferner Wismut enthält.

2. Elektrode nach Anspruch 1, worin das Material ferner Blei enthält.

3. Elektrode nach Anspruch 1 oder 2, worin als solches Manganoxid Mangandioxid vorliegt.

4. Elektrode nach Anspruch 1 oder 2, worin als solches Manganoxid Birnessit vorliegt.

5. Elektrode nach einem der vorhergehenden Ansprüche, worin jenes Mateial eine KOH-Lösung sowie ein organisches Gelierungsmittel enthält.

6. Batteriezelle mit einer Elektrode nach einem der vorhergehenden Ansprüche.

**Revendications**

1. Electrode pour un élément de batterie électrique contenant de l'oxyde de manganèse et du carbone ou du graphite finement pulvérisé, caractérisée en ce que l'électrode contient en outre du bismuth.

2. Electrode selon la revendication 1, dans laquelle ladite matière contient en outre du plomb.

3. Electrode selon la revendication 1 ou 2, dans laquelle ledit oxyde de manganèse est du bioxyde de manganèse.

4. Electrode selon la revendication 1 ou 2, dans laquelle ledit oxyde de manganèse est de la Birnessite.

5. Electrode selon l'une quelconque des revendications precédentes, dans laquelle ladite matière contient une solution de KOH comprenant un agent gélifiant organique.

6. Elément de batterie électrique comprenant une electrode telle que revendiquée dans l'une quelconque des revendications précédentes.

% UTILIZATION OF A REACTANT IN A
NON-OPTIMIZED ELECTRODE AS
A FUNCTION OF CYCLE NUMBER

| 1 | $\gamma$-$MnO_2$ (ICS#1) + $Bi_2O_3$ |
| 2 | $\gamma$-$MnO_2$ (ICS#1) + $Bi_2O_3$ |
| 3 | $\beta$-$MnO_2$ (ICS#6) + $Bi_2O_3$ |
| 4 | $\rho$-$MnO_2$ (ICS#7) + $Bi_2O_3$ |
| 5 | $\gamma$-$MnO_2$ (ICS#8) + $Bi_2O_3$ |
| 6 | $\gamma$-$MnO_2$ (ICS#1) |
| 7 | $\gamma$-$MnO_2$ (ICS#1) + $Bi_2O_3$/P60 |

FIG.1

0 146 201

% UTILIZATION OF A REACTANT IN A
NON-OPTIMIZED ELECTRODE AS
A FUNCTION OF CYCLE NUMBER

| 1 | $NaMn_xO_y$ |
|---|---|
| 2 | $Na Mn_x O_y - Bi_2 O_3$ |
| 3 | $Na Mn_x O_y - Bi_2 O_3$ |
| 4 | $Na Mn_x O_y - Bi_2 S_3$ |

FIG.2

0 146 201